# EUROPEAN PATENT SPECIFICATION

(11) **EP 2 327 501 B1**
(45) Date of publication and mention of the grant of the patent: **02.03.2016**
(21) Application number: 10189569.6
(22) Date of filing: 01.11.2010
(51) Int. Cl.: B23K 20/02

(54) **Methods of joining a first component and a second component to form a bond joint**
Verfahren zum Verbinden einer ersten Komponente mit einer zweiten Komponente zum Bilden einer Verbindung
Procédés pour joindre un premier composant et un deuxième composant pour former un raccord de liaison

(30) Priority: 30.11.2009 US 627659
(43) Date of publication of application: 01.06.2011
(73) Proprietor: Honeywell International Inc., Morris Plains, NJ 07950 (US)
(72) Inventor: Ryan, Daniel, Morristown, NJ 07962-2245 (US); Strangman, Tom, Morristown, NJ 07962-2245 (US)
(74) Representative: Houghton, Mark Phillip

(56) References cited:
- EP-A1- 0 856 374
- EP-A1- 1 642 667
- US-A- 5 836 075
- US-A1- 2009 224 027

## Description

### TECHNICAL FIELD

The inventive subject matter generally relates to joined components, and more particularly relates to methods of joining two components to form a bond joint and assemblies having bond joints.

### BACKGROUND

Turbine engines are used as the primary power source for various kinds of aircraft. Turbine engines may also serve as auxiliary power sources that drive air compressors, hydraulic pumps, and industrial electrical power generators. Most turbine engines generally follow the same basic power generation procedure. Compressed air is mixed with fuel and burned to form expanding hot combustion gases, which are directed against stationary turbine vanes in the turbine engine. The stationary turbine vanes turn the gas flow partially sideways to impinge onto turbine blades mounted on a rotatable turbine disk. The force of the impinging gas causes the turbine disk to spin at a high speed and create power. Jet propulsion engines use the power to draw more air into the engine, and the high velocity combustion gas is passed out of the gas turbine aft end to create forward thrust. Other engines use this power to turn one or more propellers, electrical generators or other devices.

Many turbine engine blades, vanes, and disks are fabricated from high temperature materials, such as nickel-based or cobalt-based superalloys. Various methods are employed to join nickel-based or cobalt-based superalloy components to each other. In one example, the components are placed in a thermal expansion tool and diffusion bonded together. In another example, conventional brazing is used to bond the components together. In still other instances, the components are bonded by a transient liquid phase bonding process in which a transient liquid phase material including melting point depressants is deposited on bonding surfaces of each of the components.

Although the aforementioned bonding methods are adequate, they may be improved. In particular, many of the aforementioned bonding methods are relatively time-consuming. Thus, production of the components may require long lead times. Additionally, some of the bonding methods in which melting point depressants are employed may introduce elements that may cause a reduction in mechanical properties. As a result, the bond joints may not provide adequate bond strength for use with components employed in certain applications.

Accordingly, it is desirable to have a method of joining components that is relatively simple and less-time consuming to perform than the aforementioned conventional bonding methods. In addition, it is desirable for the joining method to produce a bond joint that minimizes bondline porosity of the bond joint and/or distortion of the joined components. Moreover, it is desirable to have a joining method that does not adversely affect the mechanical properties of the joined components. Furthermore, other desirable features and characteristics of the inventive subject matter will become apparent from the subsequent detailed description of the inventive subject matter and the appended claims, taken in conjunction with the accompanying drawings and this background of the inventive subject matter.

Examples of conventional approaches to bonding metal components can be found in EP-A-1,642,667, US-A-2009/0224027 and US-A-5,836,075.

### BRIEF SUMMARY

The present invention provides a method as defined in claim 1.

### BRIEF DESCRIPTION OF THE DRAWINGS

The inventive subject matter will hereinafter be described in conjunction with the following drawing figures, wherein like numerals denote like elements, and
FIG. 1 is a close up view of a portion of a bladed disk, according to an embodiment;
FIG. 2 is a flow diagram of a method of joining a first component to a second component, according to an embodiment; and
FIG. 3 is a simplified cross-sectional view of a bond joint between the first component and the component during a step of the method depicted in FIG. 2, according to an embodiment.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

Generally, the inventive subject matter relates to a method of joining two components by sputtering a material onto a surface of one of the two components, where the sputtered material has an initial microstructure that is nanocrystalline or amorphous. The surfaces to be joined together are then contacted to each other to form an assembly, and the assembly is subjected to heat and pressure to thereby form a bond joint. Optionally, the bond joint is exposed to a heat treatment. The resulting bond joint is substantially transformed from the initial microstructure and a portion of the resulting bond joint has a microstructure that is substantially identical (e.g., >99% identical) to at least one of the two components.

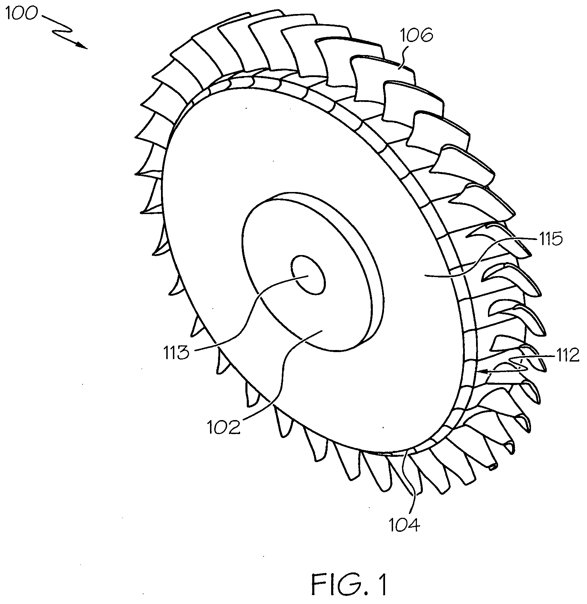

The method may be employed to join numerous components together to form an assembly that may benefit from including one or more bond joints having mechanical properties that are substantially identical to that of a parent material of the component. For example, turbine engine components, including turbine blades, airfoils, and the like may be joined to each other or to hubs, nozzles, housings and the like. Application of the various embodiments is not limited to joining turbine components, however, and may be used to join any two components where at least one of the components has a predetermined microstructure. FIG. 1 is a perspective view of a portion of a bladed disk 100, according to an embodiment. The bladed disk 100 includes various components that may be joined together by using the above-mentioned method of joining.

In an embodiment, the bladed disk 100 may comprise a hub 102, a ring 104, and a plurality of blades or airfoils 106. The hub 102 may be configured to mount to a rotatable shaft (not shown) and may comprise a material capable of withstanding temperatures up to about 675° C. In an embodiment, the material of the hub 102 may comprise an alloy including, but are not limited to, a powder metallurgy nickel-based superalloy, such as PM Astroloy or Alloy 10. In an embodiment, the material of the hub 102 may have a predetermined microstructure, such as an equiaxed microstructure or a dual microstructure including a fine grain size near a bore 113 of the hub 102 and a coarser grain size near a rim 115 of the hub 102.

According to an embodiment, the ring 104 and the blades 106 may be configured to exhibit different properties than the hub 102. For example, the ring 104 may comprise a material that is different from that of the hub 102. In an embodiment, the material may be configured to withstand temperatures that are higher than those to which the hub 102 may be exposed. In an example, the ring 104 may be configured to withstand temperatures in a range of between about 675° C and about 815° C, while the hub 102 may be configured to withstand lower temperatures. In this regard, the ring 104 may comprise a material having a composition that is different from the composition of the material comprising the hub 102. In an embodiment, the material comprising the ring 104 may include, but is not limited to, a nickel-based alloy, including but not limited to CMSX-486, Mar-M 247, or SC-180, or another alloy.

According to another embodiment, the ring 104 may comprise a plurality of arc segments 112 that are bonded together or directly bonded to the hub 102. Each arc segment 112 may comprise material having substantially identical (e.g., >99%) compositions, microstructures, and crystallography, in an embodiment. The ring 104 may have a predetermined microstructure, such as a single crystal, equiaxed or directionally solidified microstructure, that is different from the microstructure of the hub 102.

The blades 106 may comprise a material that is different from that of the hub 102, in an embodiment. In an embodiment, the material of the blades 106 may be configured to withstand temperatures that are higher than those to which the hub 102 may be exposed. In an example, the blades 106 may be configured to withstand temperatures in a range of between about 675° C and about 1150° C, while the hub 102 may be configured to withstand lower temperatures. In this regard, the blades 106 may comprise a material having a composition that is different from the composition of the material comprising the hub 102. In an embodiment, the material comprising the blades 106 may include, but is not limited to, a nickel-based alloy, including but not limited to CMSX-486, Mar-M 247, or SC-180 or another alloy.

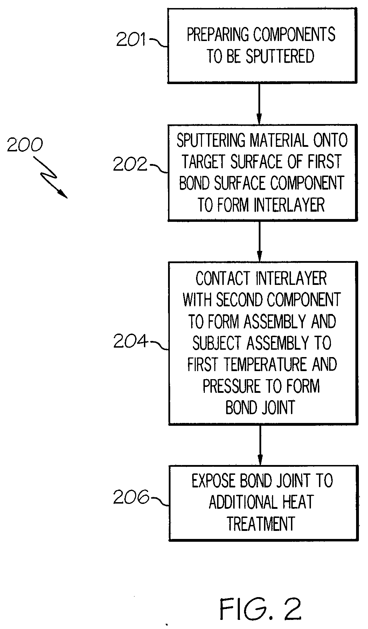

To form bond joints between two or more of the components of the bladed disk 100, the following method 200 is employed. FIG. 2 is a flow diagram of a method 200 of joining a first component to a second component, according to an embodiment. In an embodiment, the first and second components may comprise any of the hub 102, ring 104 comprised of bladed arc segments 112, or other components that may be joined together for the disk 100. Embodiments of the method may be used to join other type of components, as well. The first component may comprise a first alloy having a first composition. According to an embodiment, the first alloy may comprise one of the materials mentioned above in relation to the bladed disk 100. In another embodiment, the first alloy may be a different alloy from the alloys mentioned previously. In an embodiment, the first alloy may have a first microstructure, such as a microstructure mentioned above in relation to the bladed disk 100. In another embodiment, the first microstructure may be a different microstructure from the microstructures mentioned previously.

The second component may comprise a second alloy having a second composition. According to an embodiment, the second alloy may comprise one of the materials mentioned above in relation to the bladed disk 100. In another embodiment, the second alloy may be a different alloy from the alloys mentioned previously. In an embodiment, the second alloy may have a second microstructure, such as a microstructure mentioned above in relation to the bladed disk 100. In another embodiment, the second microstructure may be a different microstructure from the microstructures mentioned previously. According to an embodiment, the second composition may be identical (e.g., 100% identical in formulation) or substantially identical (e.g., at least 99% identical in formulation) to the first composition. In another embodiment, the second composition may be different from the first composition. For example, the second composition may comprise PM Astroloy, and the first composition may comprise Mar-M 247 or SC-180. In other embodiments, other formulations may be included for the first and/or second compositions. In still another embodiment, the second microstructure may be identical or substantially identical to the first microstructure. In another embodiment, the second microstructure may be different from the first microstructure.

In any case, the method 200 includes identifying and preparing the components to be sputtered, step 201. In an embodiment, a bond surface on the first component and a bond surface on the second component are identified and may undergo preparation. In accordance with an embodiment, the bond surfaces may be surfaces on the first and second components to be joined together. For example, in an embodiment in which the first component comprises a bladed arc segment and the second component comprises a disk, a first bond surface may be the base of the bladed arc segment, and the second bond surface may be a wall defining the rim of the disk. In another example, the first component may comprise a first arc segment, the second component may comprise a second arc segment, and the first bond surface and the second bond surface may each comprise surfaces of the arc segments that will be disposed adjacent to each other. According to an embodiment, the surfaces may be prepared by a plasma etch process or an ion cleaning process to remove unwanted materials, such as oxides, from the bond surfaces. In an example, the cleaning processes may be performed in a plasma chamber, by a chemical etch process, or by mechanical removal of the oxides. After cleaning, the first component may remain in the plasma chamber for the subsequent step of applying the interlayer, in an embodiment. In another embodiment in which preparation does not take place in a plasma chamber, the first component may be placed in a plasma chamber.

Next, a sputter material is sputtered onto a bond surface of the first component to form an interlayer, step 202. In an embodiment, the material to be sputtered to form the interlayer ("sputter material") has a third composition that is formulated identically or substantially identically to the first composition. In another embodiment, the first and second compositions may have different formulations, and the third composition is formulated from a material that is different from but is compatible with both the first and second compositions. For example, in an embodiment in which the first composition comprises a powder metallurgy material and the second composition comprises a single crystal material, the third composition may comprise MARM-247, which may be chemically compatible to join components comprising the first and second compositions together during subsequent steps. The sputter material has an initial microstructure that is different from the first and/or second microstructure. In one example, the initial microstructure may have a nanocrystalline microstructure. In another example, the initial microstructure may comprise an amorphous microstructure. In accordance with an embodiment, prior to the sputtering operation, the sputter material may be a solid mass having a configuration and dimensions suitable for a sputtering operation. For example, the sputter material may be disk-shaped.

In an embodiment, high energy ions bombard the sputter material, and atoms of the material are deposited onto the bond surface of the first component to form the interlayer. The interlayer is deposited to a thickness that is suitable to fill in voids between asperities that may be present on the bond surface of the first component. In an embodiment, the interlayer has a thickness in a range of about 2.0 micrometers to about 5.0 micrometers. In another embodiment, the interlayer may have a thickness of about 2.5 micrometers. In another embodiment, the interlayer may be thicker or thinner than the aforementioned range. In another embodiment, the second component may be placed in the sputtering chamber simultaneously with the first component or before or after sputtering has been performed on the first component, and a layer of the sputter material may be sputtered onto the joint surface.

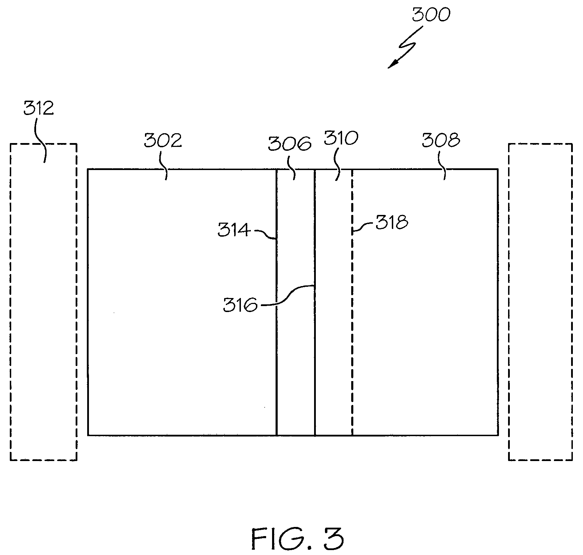

The interlayer on the first component is contacted with the second component to form an assembly, which is subjected to a first temperature and a pressure to thereby form a bond joint, step 204. FIG. 3 is a simplified cross-sectional view of a bond joint 300 between a first component 302 and a second component 308 during step 204, according to an embodiment. In an embodiment, an interlayer 306 on the first component is contacted with the joint surface 316 on the second component 308. In another embodiment, the interlayer 306 is contacted with a layer of material 310 (shown in phantom) sputtered onto the joint surface 318 of the second component 308.

According to an embodiment, the first and second components 302, 308 are placed in a fixture 312 (shown in phantom) and pressure is applied in a direction to compress the bond surfaces of the components 302, 308 together while being subjected to the first temperature. The pressure may be greater than the threshold pressure at which deformation may occur in the interlayer material, but less than a threshold pressure at which deformation may occur to the microstructures of either of the first or second components.

In an embodiment, the bonding pressure is applied to an interface of the component at a temperature that is below a recrystallization temperature of the interlayer material (e.g., the sputter material that has been sputtered to form the interlayer). For example, pressure may be applied at room temperature (e.g. between about 20°C to about 25° C) prior to heating the component. After the bonding pressure is applied, the components are then heated to a first temperature that is equal to or above the recrystallization temperature of the interlayer material. For example, in an embodiment in which the interlayer material comprises MARM-247, the first temperature may be a temperature below 1050°C. In another example in which the interlayer material comprises Alloy 10, the first temperature may be a temperature below 1050°C. In other embodiments, the first temperature may be greater or less than the aforementioned temperatures, as the first temperature depends on the particular interlayer material that is selected. In still another embodiment, the first temperature may be greater than the recrystallization temperature of the interlayer material. In an embodiment, the pressure is greater than the pressure at which deformation may occur in the nanocrystalline interlayer material, but less than a threshold pressure at which deformation may occur in the microstructures of either of the first or second components..In an embodiment, step 204 may be performed until a majority of the porosity at a bondline 314 between the first component 302 and the interlayer 306 and at a bondline 316 between the interlayer 306 and the second component 308 (or a bondline 318 between the interlayer 306 and the layer of material 310 on the second component 304) has been eliminated. In this regard, the assembly may be exposed to the first temperature and the pressure for a time period in a range of about 0.1 hour (hr.) to about 10 hrs. In another embodiment, the time period may be greater or less than the aforementioned range. In any case, during the time period, the interlayer material plastically deforms and fills a majority of the asperities that form porosity at the bondlines.

Returning to FIG. 2, to ensure that the bond joint is substantially transformed from the initial microstructure into another microstructure that is different from the nanocrystalline microstructure and the amorphous microstructure, the bond joint may be exposed to one or more additional heat treatments, step 206. For example, step 206 may include heating the assembly to a second temperature that is higher than the recrystallization temperature of the interlayer material. Additionally, the initial microstructure of the interlayer material adjacent to the first component may transform into the first microstructure of the first component, in an embodiment. The initial microstructure of the interlayer material adjacent to the second component transforms into the second microstructure of the second component, in an embodiment. In an embodiment, pressure may be applied to the first and second components during heating to the second temperature. In other embodiments, the pressure application may be removed from the first and second components during heating to the second temperature.

In another embodiment, the assembly may be subjected to an additional heat treatment to ensure interdiffusion of the interlayer material into the first component and the second component. For example, the assembly may be allowed to cool to room temperature (e.g., a temperature of about 20° C) after step 204, and then the assembly may be subjected to the additional heat and/or pressure treatment. In an embodiment, the additional heat and/or pressure treatment may include a hot isostatic pressing (HIP) process. The assembly may be heated to a temperature in a range of about 1000° to about 1300°C and may be subjected to a pressure in a range of about 1 ksi to about 25 ksi for a time period of about 1 to about 10 hours. In other embodiments, the additional heat and/or pressure treatment may be performed at temperatures and/or pressures and/or time periods that are less than or greater than the aforementioned ranges.

By employing the aforementioned method 200, bond joints may be formed between components comprising identical, substantially identical or different compositions and/or microstructures. When substantially identical materials are used for the components and the interlayer, secondary phases (which may form during conventional dissimilar material diffusion bonding processes) may be reduced at the bond lines between the components and the interlayer. When different materials are employed for the interlayer and the first and/or second components, the bond joint formed by the aforementioned method has improved mechanical properties over bond joints formed by conventional joining methods, because the improved bond joint has a substantially identical microstructure to that of the first and/or second components.

Additionally, because cleaning of the bond surfaces of the component and application of the interlayer to the components may be performed in a single chamber, contamination of the bond joint may be reduced. Moreover, the above-described method may be less time-consuming than conventional joining methods, which may decrease component production costs.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A method (200) of joining a first component (302) to a second component (308) to form a bond joint (300), the first component (302) comprising a first alloy having a first composition and a first microstructure, the second component (308) comprising a second alloy having a second composition and a second microstructure, and the method (200) comprising the steps of:
sputtering (202) a sputter material onto a bond surface of the first component (302) to form an interlayer (306) of uniform composition throughout, the sputter material of the interlayer (306) having a third composition, the interlayer (306) having an initial microstructure different from the first and second microstructures, the initial microstructure selected from a group consisting of a nanocrystalline microstructure and an amorphous microstructure;
contacting (204) the interlayer (306) on the first component (302) with a joint surface (318) of the second component (308) to form an assembly and subjecting the assembly to a first pressure and heating the assembly to a first temperature to thereby form the bond joint (300); and
heating (206) the assembly to a second temperature to transform the initial microstructure into the first microstructure, the second microstructure, or both, a portion of the bond joint having the first microstructure, the second microstructure, or both.

2. The method (200) of claim 1, wherein the interlayer (306) has a thickness in a range of about 2.0 micrometers to about 5.0 micrometers.

3. The method (200) of claim 1, wherein the third composition is substantially identical to the first composition.

4. The method (200) of claim 3, wherein the second composition is substantially identical to the first composition.

5. The method (200) of claim 3, wherein the second composition is different from the first composition.

6. The method (200) of claim 1, wherein the third composition is different from the first composition and the second composition.

7. The method (200) of claim 1, wherein the first pressure is less than a threshold pressure at which deformation of the first microstructure and the second microstructure results.

8. The method (200) of claim 1, wherein the second temperature is higher than a recrystallization temperature of the sputter material.

## Patentansprüche

1. Verfahren (200) zum Verbinden einer ersten Komponente (302) mit einer zweiten Komponente (308) zum Bilden einer Verbindung (300), wobei die erste Komponente (302) eine erste Legierung umfasst, die eine erste Zusammensetzung und eine erste Mikrostruktur aufweist, wobei die zweite Komponente (308) eine zweite Legierung umfasst, die eine zweite Zusammensetzung und eine zweite Mikrostruktur aufweist, und wobei das Verfahren (200) die Schritte umfasst:
Sputtern (202) eines Sputtermaterials auf eine Bindungsoberfläche der ersten Komponente (302) zum Bilden einer Zwischenschicht (306) mit einer einheitlichen Zusammensetzung darin, wobei das Sputtermaterial der Zwischenschicht (306) eine dritte Zusammensetzung aufweist, wobei die Zwischenschicht (306) eine anfängliche Mikrostruktur aufweist, die anders als die erste und die zweite Mikrostruktur ist, wobei die anfängliche Mikrostruktur ausgewählt ist aus einer Gruppe, bestehend aus einer nanokristallinen Mikrostruktur und einer amorphen Mikrostruktur;
Inkontaktbringen (204) der Zwischenschicht (306) auf der ersten Komponente (302) mit einer Bindungsfläche (318) der zweiten Komponente (308) zum Bilden einer Anordnung und Aussetzen der Anordnung einem ersten Druck und Erwärmen der Anordnung auf eine erste Temperatur, um so die Verbindung (300) zu bilden; und
Erwärmen (206) der Anordnung auf eine zweite Temperatur zum Umwandeln der anfänglichen Mikrostruktur in die erste Mikrostruktur, die zweite Mikrostruktur oder in beide, wobei ein Abschnitt der Verbindung die erste Mikrostruktur, die zweite Mikrostruktur oder beide aufweist.

2. Verfahren (200) nach Anspruch 1, wobei die Zwischenschicht (306) eine Dicke in einem Bereich von etwa 2,0 Mikrometer bis etwa 5,0 Mikrometer aufweist.

3. Verfahren (200) nach Anspruch 1, wobei die dritte Zusammensetzung im Wesentlichen identisch mit der ersten Zusammensetzung ist.

4. Verfahren (200) nach Anspruch 3, wobei die zweite Zusammensetzung im Wesentlichen identisch mit der ersten Zusammensetzung ist.

5. Verfahren (200) nach Anspruch 3, wobei die zweite Zusammensetzung anders als die erste Zusammensetzung ist.

6. Verfahren (200) nach Anspruch 1, wobei die dritte Zusammensetzung anders als die erste Zusammensetzung und die zweite Zusammensetzung ist.

7. Verfahren (200) nach Anspruch 1, wobei der erste Druck kleiner als ein Schwellendruck ist, bei dem die Verformung der ersten Mikrostruktur und der zweiten Mikrostruktur erfolgt.

8. Verfahren (200) nach Anspruch 1, wobei die zweite Temperatur höher als eine Rekristallisationstemperatur des Sputtermaterials ist.

## Revendications

1. Procédé (200) d'assemblage d'un premier composant (302) à un deuxième composant (308) pour former un assemblage collé (300), le premier composant (302) comprenant un premier alliage ayant une première composition et une première microstructure, le deuxième composant (308) comprenant un deuxième alliage ayant une deuxième composition et une deuxième microstructure, et le procédé (200) comprenant les étapes consistant à :
pulvériser (202) un matériau de pulvérisation sur une surface de collage du premier composant (302) pour former une couche intercalaire (306) de composition uniforme partout, le matériau de pulvérisation de la couche intercalaire (306) ayant une troisième composition, la couche intercalaire (306) ayant une microstructure initiale différente des première et deuxième microstructures, la microstructure initiale étant choisie dans un groupe constitué par une microstructure nanocristalline et une microstructure amorphe ;
mettre en contact (204) la couche intercalaire (306) sur le premier composant (302) avec une surface d'assemblage (318) du deuxième composant (308) pour former un ensemble et soumettre l'ensemble à une première pression et chauffer l'ensemble jusqu'à une première température pour former ainsi l'assemblage collé (300) ; et
chauffer (206) l'ensemble jusqu'à une deuxième température pour transformer la microstructure initiale en la première microstructure, la deuxième microstructure, ou les deux, une partie de l'assemblage collé ayant la première microstructure, la deuxième microstructure, ou les deux.

2. Procédé (200) de la revendication 1, dans lequel la couche intercalaire (306) a une épaisseur dans une gamme d'environ 2,0 micromètres à environ 5,0 micromètres.

3. Procédé (200) de la revendication 1, dans lequel la troisième composition est sensiblement identique à la première composition.

4. Procédé (200) de la revendication 3, dans lequel la deuxième composition est sensiblement identique à la première composition.

5. Procédé (200) de la revendication 3, dans lequel la deuxième composition est différente de la première composition.

6. Procédé (200) de la revendication 1, dans lequel la troisième composition est différente de la première composition et de la deuxième composition.

7. Procédé (200) de la revendication 1, dans lequel la première pression est inférieure à une pression seuil à laquelle se produit une déformation de la première microstructure et de la deuxième microstructure.

8. Procédé (200) de la revendication 1, dans lequel la deuxième température est supérieure à une température de recristallisation du matériau de pulvérisation.
